# EUROPEAN PATENT APPLICATION

(11) **EP 2 620 836 A1**
(43) Date of publication of application: **31.07.2013**
(21) Application number: 12152544.8
(22) Date of filing: 25.01.2012
(51) Int. Cl.: G06F 1/20

(54) **Controller, resource management apparatus, and computing environment for controlling fan speeds**

(71) Applicant: Fujitsu Limited, Kawasaki-shi, Kanagawa 211-8588 (JP)
(72) Inventor: van den Berghe, Sven, Marlow, Buckinghamshire SL7 3LE (GB)
(74) Representative: Hutchison, James

(57) **Abstract**

Embodiments of the present invention provide or include a controller for a computing environment, the computing environment including a room containing a plurality of computers each having an individual housing and a local fan for pulling air into the housing, and an air supply system having one or more air supply fans for pushing air into the room; the pushing of air by the one or more air supply fans and the pulling of air by the local fans establishing a forced airflow pattern. The controller comprises a fan control module operable to set the speed of each local fan and each air supply fan to realise a configuration of speeds required for a predetermined forced airflow pattern, and a workload allocation module being operable to allocate workload to computers among the plurality of computers, wherein allocations are based on the forced airflow pattern.

## Description

This invention lies in the field of controllers for computing environments and more specifically in the field of controllers of air supply systems and workload allocation in data centres or other computing environments in which a number of computers are housed within an air-conditioned room.

Given their enormous electrical power consumption and associated carbon footprint, data centres are natural targets for techniques aimed at improving their energy efficiency and reducing their impact on the environment. This is especially true in light of the explosive growth in the number of data centres and the increasing dependence of our society on the information technology and computing services provided by them. Besides, energy costs are a major fraction of the operating costs of data centres, becoming almost as important as the cost of the facilities and equipment.

The IT equipment in data centres produces a lot of heat that must be removed from the rooms holding the IT equipment. In most data centres the first step of this process uses air to move heat from the IT equipment to a more efficient heat transfer medium such as water (air is safe around electrical equipment, does not need expensive plumbing but is poor for heat transfer). Heat is extracted from the air and the air is then returned to the data centre room to be reused (since the air needs to be high quality - clean and dry and also to ensure a closed system in case of fire). The second transfer medium (water) is moved so that the heat can be ejected to the outside using some energy intensive process such as chillers as cooling units.

The cost of heat transfer is partially determined by the temperature difference between the two media and so one parameter determining the data centre's efficiency is the temperature of the air supplied to the data centre rooms, the warmer this is compared to the second medium (e.g. water), the less energy the data centre uses.

The air flow in a data centre must be managed vary carefully, a goal is to ensure that sufficient cooling is delivered to all the IT equipment and care must be taken to ensure that there are no "hot spots" without requiring an over-cold air supply.

This approach to managing data centre airflow has been acceptable when data centre loads were stable (the IT load was stable and the IT equipment drew constant amounts of power). Modern data centres have much less stable loads and modern IT equipment has power requirements that vary much more with IT load. This means that the heat produced by the IT equipment can change throughout a data centre room over time.

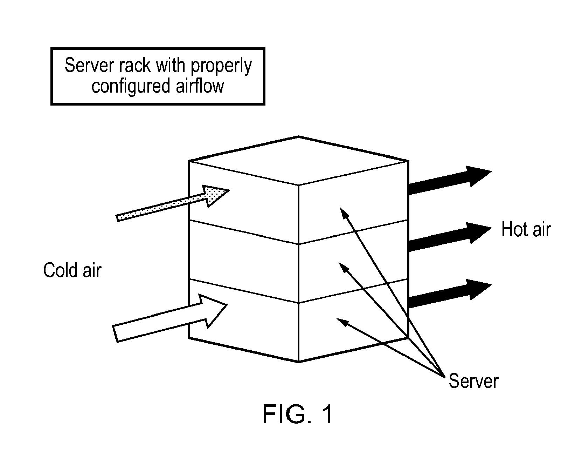

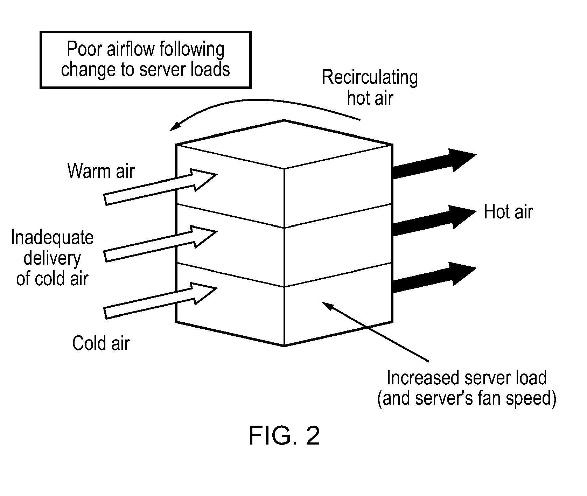

The pattern of airflow in a room housing computers such as a data centre room or hall, must be managed to ensure that all the computer equipment is properly cooled; that it receives an adequate supply of cool air and that the hot air is properly removed. It is desirable to ensure a clean flow of cooled air to the equipment and minimise the recirculation of hot air produced by the computer equipment back to the computer equipment intakes (see Figure 1, which illustrates a properly configured airflow through a server rack, and Figure 2, which illustrates how overheating can occur when server loads change).

Moving IT load around affects the heat produced by the IT equipment and this means that the airflow patterns that were previously optimised to cool the IT equipment will no longer be right. One way to cope with dynamically changing airflow is to make the supplied air colder, which costs energy.

Embodiments of the present invention provide or include a controller for a computing environment, the computing environment including a room containing a plurality of computers each having an individual housing and a local fan for pulling air into the housing, and an air supply system having one or more air supply fans for pushing air into the room; the pushing of air by the one or more air supply fans and the pulling of air by the local fans creating a forced airflow pattern. The controller comprises a fan control module operable to set the speed of each local fan and each air supply fan to realise a configuration of speeds required for a predetermined forced airflow pattern, and a workload allocation module being operable to allocate workload to computers among the plurality of computers, wherein allocations are based on the forced airflow pattern.

Invention embodiments address the issue of ensuring effective cooling of computers in a room, for example, data centre equipment in a data centre room or hall, under dynamic load conditions. Dynamic loads mean that parts of the room (data centre) are heating up or cooling down as the computer equipment changes how hard it works due to workload being completed and new workload being allocated among the computers, or workload being migrated to other servers. Workload may be measured by a metric for assessing the amount of power that will be consumed by components processing data in performing a task, or may be measured by a metric form assessing the amount of power that will be consumed by a computer as a whole in performing a task, or may be measured by a metric for assessing the amount of data (in bits or bytes) that must be processed in performing a task. Other metrics and systems for measuring workload will be apparent to the skilled person.

In known systems, cooling of dynamic loads is handled by local responses to heat load changes e.g. by changing server fan speed. This leads to inefficient cooling: computers or computing equipment in parts of the room are over cooled in order to supply sufficient cooling to hotter parts of the room or in order to counter the possibility that some equipment overheats should insufficient cooling be supplied. This will be done regardless of the impact that the increased flow of air into that server will have on its neighbours. It is possible that this increased airflow will reduce the flow of air into neighbouring servers that may then have to increase their fan speed to compensate. These local decisions will lead to a large increase in energy use by the fans when the required cooling could be more efficiently supplied by the larger scale room air supply system working cooperatively with the local equipment. Dynamic loads and local cooling responses lead to unpredictable air flow patterns and safe operation can only be guaranteed by over-cooling the data centre, which leads to increased energy costs.

On the other hand, embodiments of the present invention utilise stable, well-understood forced airflow patterns that have been predetermined and established as being capable of providing a known level of cooling to the IT equipment (computers in the room). The way that this is done is to remove all the fans from local control and place them under central control of a controller embodying the present invention. The controller knows one or more fan speed configurations (both local fans of IT equipment in the room and air supply fans such as those connected to cooling equipment) that deliver known amounts of airflow and hence cooling (if the temperature of the air is known) to regions of the data centre.

The controller may be realised as software which, when executed by one or more computers, causes said one or more computers to function as the controller described above. Alternatively, the controller may be realised as a dedicated piece of hardware or an apparatus comprising several pieces of hardware. The or each piece of hardware may execute firmware in order to realise the functionality of the controller described above.

The computing environment may be, for example, a data centre wherein the plurality of computers is a plurality of servers. The servers may be arranged on racks within the room. The computers may be networked so that they are in communication with one another and with a centralised control system including the controller described above. The room may be an enclosure having controlled airflow, and may be a closed air system in the sense that air is pushed into the room by air supply fans, circulated by local fans and possibly by additional fans, and then sucked into an exhaust system for reconditioning (including cooling) prior to being pushed back into the room by the air supply fans. The computers may be infrastructure-level provision of a cloud computing service. The pulling of air by local fans in computers is used in this document to include the process of a computer fan (such as a server fan) pulling air in from the housing room (to the computer casing) at a first temperature, and passing the air back to the housing room at a second, higher, temperature (the air having been heated by the components within the computer/server casing).

The individual housings of the computers may be computer cases, but could be any casing element providing a structure surrounding computing components of the computer.

The air supply system may be an air conditioning system comprising one or more air conditioning units such as a computer room air conditioning unit (CRAC unit) each including a fan for pushing air into the room and a cooling unit for removing heat from the air. The fan may push air into the room via a system of ducts or a plenum, which may be underfloor, in the ceiling, the walls, or even within the room itself. The ducting or plenum may be provided with ducts or perforations, eg perforated floor tiles or perforated walls, to allow the flow of air into the room.

The net movement of air within such a room includes a contribution due to pushing and pulling of air by fans (referred to as forced airflow in this document) and a contribution arising from convective circulation. The inventor of the present invention has come to the surprising realisation that the latter contribution is so small in comparison to the contribution from forced airflow that, for heat transfer purposes, it can be ignored. This gives rise to the advantageous effect that by fixing the forced airflow, the net flow of air can be assumed to be the same for computer equipment cooling purposes, and the reluctance of computing environment operators to allow resource or workload management changes which may affect airflow is overcome.

Forced airflow patterns can be considered to be predetermined insofar as the fan control module is aware of the combination of fan speeds required to realise a particular forced airflow pattern. For example, it may be that a system of sensors or a computational fluid dynamics (CFD) simulation is used to associate a forced airflow pattern with a fan speed configuration. Each fan may have a single operating speed, so that the fan speed configuration is simply which fans must be switched on and which switched off. Alternatively one or more of the fans may have a plurality of speed settings, which speed settings have been taken into account at the simulation or sensing stage, and of which the fan control module is aware. A forced airflow pattern may be composed of one or more airflow paths, which may be independent, or may interact with one another in a network of airflow paths. A forced airflow pattern may be considered to be established (or determined, and hence subsequently predetermined) when both it and the fan speeds required to create it are determined. A forced airflow pattern may be considered to be created when the requisite fans are operating to physically force air into the established pattern.

Workload may be accepted by the controller as one or a series of tasks which form discrete units of work which can be performed at different computers within a computing environment. Allocations are based on the forced airflow pattern, so the workload allocation module is aware of the current forced airflow pattern in the room and allocates workload to computers in dependence upon the location of the computer with respect to the forced airflow pattern. As a simple example, it may be that the current forced airflow pattern moves air through some racks or computers, but not others. Hence the workload allocation module is configured to allocate workload to computers through which air is moved, or to computers located in racks through which air is moved. The workload allocation module or some other component of the controller may be configured to maintain a record of current total workload in the computers in the room, which may also require either a system whereby the computers notify the controller when a task or some workload is complete, or the workload allocation module estimating a completion time for some workload, and modifying the current total workload accordingly when the estimated completion time is reached.

Optionally, embodiments of the present invention may also include an airflow pattern selection module being operable to select a forced airflow pattern for the room from among a plurality of predetermined forced airflow patterns, the selection being made based on a requirement that a current total workload being handled by the plurality of computers collectively is within a range of total workloads for which the forced airflow pattern is adapted to sufficiently cool the plurality of computers.

Advantageously, the provision of more than one forced airflow pattern from which the airflow pattern selection module can select one best suited to the current (and possibly the projected) workload. It may be that at certain times of day, for example overnight, a data centre or computing environment will rarely operate at more than, say, 25% of its maximum capacity, and hence a forced airflow pattern in which a correspondingly low amount of air is circulated is sufficient. The range of total workloads which a particular forced airflow pattern is adapted to cool may have been determined by a simulation such as a CFD simulation, or may have been determined empirically using a system of sensors. It may be that the upper end of the range can only be achieved if a certain amount of optimisation is applied to the allocation of the workload within the room. For example, allocating a certain portion of the workload to computers at which there is a greater flow of air may result in more effective cooling and hence allow the upper end of the range to be achieved. The plurality of forced airflow patterns may be stored in association with a range of total workloads which each forced airflow pattern is adapted to cool, and a fan speed configuration which the fan control module must set in order to realise the forced airflow pattern.

The forced airflow pattern in the room can be changed by the airflow pattern selection module in cooperation with the workload allocation module and the fan control module when there are large changes to the workload (which take the workload outside of a range of workloads which it is adapted to cool), but each forced airflow pattern is predetermined and hence known a priori to provide safe and efficient cooling for all workload distributions applied to it. The controller is configured to select the best forced airflow pattern via the airflow pattern selection module to match the cooling requirements of the current IT load and to set all the fans speeds to deliver this known forced airflow pattern via the fan control module.

As an additional benefit, using a known forced airflow pattern from among more than one known forced airflow patterns means that it is possible to compensate for equipment failures by using a known forced airflow pattern that avoids the failed equipment without having to provide redundancy in the equipment - resulting in capital cost savings and avoiding operational costs resulting from running redundant equipment at low loads.

In embodiments of the present invention, the fan control module is operable to maintain the selected forced airflow pattern irrespective of changes in workload distribution and irrespective of changes in the current total workload while the current total workload remains within the range of the selected forced airflow pattern.

Advantageously, a controller as defined above enables flexibility in allocation of workload in a computing environment and the resultant efficiency savings, but also maintains a reliable, established forced airflow pattern in the room containing the computers.

Invention embodiments maintain a forced airflow pattern when the IT load (workload) changes within a certain range and optimise workload placement and other configurable operating parameters for cooling efficiency. The airflow pattern in the room is predetermined and known to the controller and hence controlled to be in a state that is known to be safe for the computer equipment.

Advantageously, maintaining a particular forced airflow pattern regardless of changes in workload (whether that be the size of the workload or its distribution within the room) enables some flexibility in operating the computing environment so that some efficiency optimisation is realised. The computing environment operator can allow workload to be allocated around computers within the room without worrying about consequential changes in the forced airflow pattern. The workload distribution refers to the location of the work either geographically or in terms of computer identities within the room, and the total workload refers to a value of some metric for assessing the amount of computing work being performed by the plurality of computers in the room.

In order to enable selection of an appropriate forced airflow pattern for the current operating conditions in the computing environment, it may be that the airflow pattern selection module is operable to store each of a plurality of predetermined forced airflow patterns for the room in association with a range of total workloads for which the forced airflow pattern is adapted to sufficiently cool the plurality of computers.

Advantageously, storing the forced airflow patterns in association with a range of workloads enables the airflow pattern selection module to conserve energy in the computing environment as a whole by selecting an airflow pattern which is appropriate for the current or projected future workload. It may be that a forced airflow pattern which circulates a relatively high amount of air around a relatively large portion of the room consumes more energy than one which circulates less air around a smaller portion. Correspondingly, the former forced airflow pattern may consume more energy, and be adapted to cool the plurality of computers when performing a relatively higher workload than the latter forced airflow pattern, which consumes less energy but is adapted to cool the plurality of computers when performing a lower workload. The airflow pattern selection system may have access to information reflecting the expected changes in workload (for example, the workload may approximately follow the same pattern if peaks and troughs from day-to-day) so that a forced airflow pattern can be selected that is appropriate for the current total workload and for an expected change in total workload.

As a further implementation option, it may that the fan control module is also operable to set the speeds of circulation fans which are fans provided in the room in addition to the plurality of local fans and the one or more air supply fans.

Depending on the implementation of the invention embodiment, it may be that there are additional fans within the room that also affect the forced airflow pattern. If that is the case, it is desirable for these additional fans to be controlled by the fan control module in order that the actual airflow pattern in the room can be maintained as close as possible to the forced airflow pattern resulting from the fans under the control of the fan control module.

As an optional module for performing a process by which analysis of data for workload placement and/or forced airflow pattern selection is made, amongst other configurable parameters, embodiments of the present invention optionally include a heat transfer potential data generation module configured to use a model of the forced airflow pattern, data representing the temperature of the air that is pushed into the room by the or each air supply fan, and data representing heat transfer properties of the local fans, to determine the heat transfer potential of the room or one or more regions within the room.

Advantageously, such a heat transfer potential data generation module provides data which can be used by, for example, the workload allocation module to optimise workload placement. The heat transfer potential data generation module is configured to generate data representing the amount of heat that can be transferred away from the computers within the room, or the computers within a particular region of the room. The heat transfer potential data represent the amount of heat that can be transferred from the computers given certain other conditions, including one or more of the forced airflow patterns, the temperature of the air that is pushed into the room by the or each air supply fan, and the heat transfer properties of the local fans. It may be that the heat transfer potential data generation module is configured to perform a heat flow simulation (such as a CFD simulation) in order to determine the heat transfer potential of the room or a particular region within the room. Such a simulation could also be determined how the heat transfer potential data would be modified if certain conditions were adjusted, such as the temperature of air pushed into the room. The heat transfer potential data generation module may also have information representing the heat generation characteristic (heat generated as a function of workload) of the computers within the room.

The regions (in this example and elsewhere in this document) may be any suitable sub-division of the room, so may represent a geographical division of the room into portions, for example, quadrants, or each rack or even each computer may form its own region.

Embodiments of the present invention may be configured for use in a computing environment in which computers are housed in a room having an air supply system which further comprises one or more cooling units configured to remove heat from the air before it is pushed into the room by the one or more air supply fans. In such a case, the controller may further comprise a supplied airflow temperature control module being operable to control the one or more cooling units to set the temperature of the air that is pushed into the room by the or each air supply fan.

Using one or more known forced airflow patterns that have been shown by experiment or in simulation or both to cool the room effectively and efficiently means that the average supply air temperature can be much warmer (and so more energy efficient).

The cooling units may be provided separately from the fans, or it may be that the air supply system comprises one or more air conditioning units each comprising a cooling unit and a fan. A cooling unit may be connected to an air supply fan in the sense that they are in fluid communication with one another to the extent that the air supply fan pushes air into the room that has been cooled by the cooling unit. Advantageously, the provision of cooling units that are controllable by a module of the controller gives the controller an additional degree of freedom in optimising energy usage in the computing environment. The controller can alter the temperature of air being pushed into the room, and thus increase or decrease the heat transfer potential of the room or regions within the room without affecting the forced airflow pattern. Of course, the energy costs of cooling may be taken into account by the supplied airflow temperature module. Thus, if the heat transfer potential data of regions within the room suggest that more workload (there may be a predetermined limit to how close the two measures should be) can be added without the heat generation exceeding the heat transfer potential, then energy could be saved by reducing the operating level of the cooling units, thus increasing the temperature of the air that is pushed into the room, and decreasing the heat transfer potential of one or more regions within the room (but only to the extent that the heat transfer potential still exceeds the heat generation). Of course, such changes may be made in correspondence with the heat transfer potential data generation module, in order that it can be ensured that changes made by the supplied airflow temperature control module do not cause the heat transfer potential to drop below the heat generation.

Knowing the airflow patterns means that heat flow is derivable and can be found, for example, by using a heat flow simulator such as a CFD simulator. This in turn means that workload can be placed onto computer equipment to direct heat towards or away from particular pieces of equipment based on airflow paths and the associated heat flow. In this way it is possible to operate the cooling equipment most efficiently. Examples include forcing the heat away from some pieces of equipment so that the cooling units cooling the air that flows thereto can be turned off, or distributing load evenly if the cooling units operate more efficiently at low loads.

In an exemplary embodiment the supplied airflow temperature control module is configured to adjust the temperature of the air that is pushed into the room by the or each air supply fan in order to maintain a difference between the heat generation in the room or a region of the room and the heat transfer potential of said room or region of the room at a predetermined level.

Often, a characteristic of equipment such as fans, computers, air conditioning units, or cooling units, is that useful output does not vary linearly as a function of energy consumed (or transferred). Therefore, there is often a so-called 'sweetspot' (or more than one sweetspot) at which the useful output per unit of energy consumed is maximised (hence the sweetspot is a point of maximum efficiency). Optionally, and based on a model of the forced airflow pattern, the workload allocation module may be configured to allocate workload to a computer in which the air that is pulled into the housing by the local fan has been cooled by one of the one or more cooling units operating at a level below a level of maximum efficiency. For a cooling unit, the level of maximum efficiency is either a combination of input and output temperatures, or a temperature difference between input and output temperature, at which the temperature drop per unit of energy consumed is at a local or global maximum level.

Advantageously, embodiments of the present invention enable energy savings to be made by allocating workload to computers that pull air into their housing in a known airflow pattern so that it is known which cooling unit or cooling units cool that air, hence computers or a region within the room can be loaded with work by the workload allocation module to the extent that their heat generation matches the heat transfer potential achieved with the cooling unit operating at maximum efficiency. It may be therefore, that the workload allocation module allocates work to computers located along a path of air that is cooled by a particular cooling unit until the heat generation as a result of that workload matches (possibly to within a predetermined relative or absolute limit) the heat transfer potential resulting from the local fans pulling air into the computer housing that has been cooled by the cooling unit operating at maximum efficiency. Workload can be allocated in this way to paths in turn, so that cooling units are either turned off, or operating at maximum efficiency, with the exception of one cooling unit that compensates for the remaining heat generation.

Additionally, virtualisation technologies mean that it may be possible to distribute loads throughout a data centre room to optimise the efficiency of the IT equipment. For example, consolidating loads from many lightly loaded servers onto one server to enable the turning off of one or more of the previously lightly loaded servers.

In embodiments of another aspect of the invention, there is provided a resource management apparatus for a computing environment, the computing environment including a room containing a plurality of computers each having an individual housing and a local fan for pulling air into the housing, and an air supply system having one or more air supply fans for pushing air into the room, the pushing of air by the one or more air supply fans and the pulling of air by the local fans creating a forced airflow pattern; wherein the resource management apparatus is configured to allocate computing resources of the plurality of computers to one or more virtual machines to which workload can be allocated, the resource management apparatus comprising a controller according to any of the controller embodiments described herein, the workload allocation module being operable to allocate workload to computers among the plurality of computers by allocating workload to a virtual machine in dependence upon the location of the computing resources allocated to the virtual machine.

Advantageously, in virtualised computing environments the allocation of workload is particularly dynamic, so efficiency improvements resulting from allocating workload in a more effective way are emphasised.

Invention embodiments allow data centres to operate with high energy efficiency and with high security of service while coping with large fluctuation of load across the data centre equipment brought about by the application mobility enabled by virtualisation. Full realisation of the benefits of virtualisation from the data centre operator's viewpoint is currently restricted by caution about the impact of load mobility on the stability of the data centre cooling, embodiments of this invention ensure stable cooling of the room under a large range of load conditions.

In embodiments of another aspect of the invention, there is provided a computing environment including a plurality of computers being housed within a room and each having an individual housing and a local fan for pulling air into the housing, an air supply system having one or more air supply fans for pushing air into the room, the pushing of air by the one or more air supply fans and the pulling of air by the local fans creating a forced airflow pattern; and a controller according to any of the controller embodiments described herein, or a resource management apparatus according to any of the resource management apparatus or resource manager embodiments described herein.

Embodiments of a further aspect of the invention provide or perform a method for controlling fan speeds and workload allocation in a computing environment, the computing environment including a room containing a plurality of computers each having an individual housing and a local fan for pulling air into the housing; and an air supply system having one or more air supply fans for pushing air into the room; the pushing of air by the one or more air supply fans and the pulling of air by the local fans creating a forced airflow pattern. The method comprises setting the speed of each local fan and each air supply fan to realise a configuration of speeds required for a predetermined forced airflow pattern, and allocating workload to computers among the plurality of computers, wherein allocations are based on the forced airflow pattern.

Embodiments of a further aspect of the invention include a computer program which, when executed by a computer or computers, causes the computer or computers to function as any of the controller embodiments described herein, or to function as any of the resource manager or resource management apparatus embodiments described herein. Alternatively or additionally, embodiments of the invention computer program which, when executed by a computer or computers, causes the computer or computers to perform any of the method embodiments described herein.

Preferred features of the present invention will now be described, purely by way of example, with reference to the accompanying drawings, in which:-
Figure 1 illustrates a properly configured airflow through a server rack;
Figure 2 illustrates how overheating can occur at a server rack when server loads change;
Figure 3 is a schematic illustration of a controller embodying the present invention implemented within a system, which system may also therefore embody the present invention;
Figure 4 illustrates an example of an implementation of an embodiment of the present invention;
Figure 5 illustrates an exemplary process for creating a forced airflow pattern for a particular range of workloads;
Figure 6 provides a summary of a control procedure that may be performed when the workload in the computing environment changes in an embodiment of the present invention to which a plurality of forced airflow patterns are available; and
Figure 7 illustrates a simplified example of a control procedure that may be performed when the workload in the computing environment changes in an embodiment in which there is only one established forced airflow pattern.

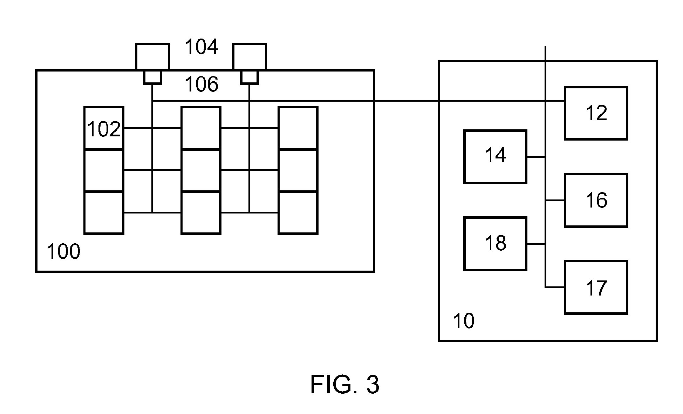

Figure 3 is a schematic illustration of a controller embodying the present invention implemented within a system, which system may also therefore embody the present invention.

The controller 10 includes a fan control module 12, a workload allocation module 14, and optionally any combination of the following: an airflow pattern selection module 16, a supplied airflow temperature control module 17, and a heat transfer potential data generation module 18. The thin lines on the figure denote data connections, but it is not essential that each of the illustrated data connections are provided, and will be evident from the following description which data connections are required to realise which functionality.

The controller 10 is illustrated external to a room 100 containing computers or computer racks 102 and having an air supply system 104 including two air supply fans 106. The controller, although illustrated external to the room 100, may actually be provided within the room 100, and may be embodied as a software program running on one or more of the computers 102.

Each computer 102 has a local fan which is connected to the controller 10, and in particular to the fan control module 12. The data connection between the computer 102 and the controller 10 also provides a data connection by which workload can be distributed to the computers 102 following allocation by the workload allocation module 14. Of course, it may be that the workload allocation module 14 merely allocates workload to computers 102 and some other process or hardware is responsible for physically distributing the workload to the computers 102.

Each of the fan control module 12, the workload allocation module 14, the airflow pattern selection module 16, the supplied airflow temperature control module 17, and the heat transfer potential data generation module 18 (elsewhere in this document collectively referred to as "the controller modules" for convenience) may be embodied as software which causes a computer to function as the module, for example, using a combination of a processor, a memory, a network interface card, and a storage device.

Alternatively, each module may be embodied as hardware with hardwired logic for functioning as the particular module, or configured to execute firmware causing that hardware to function as the module.

The controller modules may all be provided on a single computer or piece of hardware, or the controller modules may be split across one or more computers, control systems, or pieces of hardware. Furthermore, each individual controller module may be split across more than one computer or piece of hardware operating in cooperation with one another.

The fan control module 12 is operable (or configured or adapted) to set the speed of each local fan and each air supply fan to realise a configuration of speeds required for a predetermined forced airflow pattern. The fan control module 12 is operable to signal to each of the local fans and to the air supply fans to set their speeds in accordance with a configuration of speeds known by the fan control module 12 to provide a particular forced airflow pattern within the room 100, which forced airflow pattern is also known by the workload allocation module 14.

The workload allocation module 14, knowing the forced airflow pattern within the room 100, can allocate workload to computers 102 based on the forced airflow pattern. For example, the workload allocation module 14 may allocate work to computers 102 based on the location of the computers within the room 100 in relation to airflow paths forming the forced airflow pattern. For example, there may be a predetermined maximum limit of the amount of workload that can be placed on computers 102 located along a particular airflow path. Alternatively or additionally, and depending on the implementation, the workload allocation module 14 may be configured to evenly distribute workload between airflow paths, or to load computers 102 along a particular path to a predetermined level before allocating any workload to computers 102 located along another airflow path. The workload allocation module 14 is configured to send signals required to allocate workload to computers 102. It may be that this includes sending inputs necessary to perform the workload, or possibly an address or identifier for the inputs. It may be that this functionality is performed in cooperation with a resource manager or resource management apparatus, depending on the implementation.

The controller 10 may additionally comprise an airflow pattern selection module 16. The airflow pattern selection module 16 may be used in embodiments in which more than one forced airflow pattern in the room and the fan speed configuration required to realise each of the more than one forced airflow patterns has been established. The airflow pattern selection module 16 may be configured to apply logic to select which forced airflow pattern should be produced in the room 100, and hence inform or signal the fan control module 12 appropriately. For example, it may be that the airflow pattern selection module 16 is configured to operate in cooperation with the workload allocation module 14 in order to establish the total workload currently being performed by the computers in the room, and to select a forced airflow pattern that is known to provide sufficient air to the computers 102 to remove the heat generated in performing the current total workload.

The forced airflow patterns may be established using observation, experience, simulation, and/or computer modelling to develop a collection of known forced air flow patterns that can be implemented in the room by setting the fans to operate at set speeds and in the knowledge of the heat transfer properties of the fans. This adds certainty to the process of ensuring sufficient cooling and so it will be possible to run the computing environment at a higher temperature (less energy cost). Under these conditions the fans that move air around will operate at fixed speeds and not change with load changes within a range.

Forced airflow patterns may differ from one another by fan speed changes causing a known change in forced airflow pattern. For example, the fan speed changes may include doubling the fan speed of every local fan in a particular rack or row of racks.

Modern fans are very efficient and the energy that they consume is a small fraction of the energy consumed in cooling the computers and in running the IT equipment. Hence it is not necessarily inefficient to maintain the fans running all the time (furthermore, the fan manufacturers could design fans to operate most efficiently at a particular constant speed - with variable speed available to adapt to different data centres and to cope with emergencies).

Embodiments also take advantage of the observation that computer equipment can operate over a range of temperatures; it is not necessary to maintain a completely constant temperature, maintaining the operating temperature within a range of temperatures is sufficient. Therefore, if heat generation in a region exceeds heat transfer away from that region, the resulting temperature increase will not necessarily cause the temperature of the computer to exceed a maximum safe operating temperature.

Optionally, the controller 10 may additionally comprise a supplied airflow temperature control module 17. The supplied airflow temperature control module 17 should have a data connection to each of the cooling units responsible for cooling the air removed from the room 100 and pushed back into the room 100 by the air supply fans 106. The supplied airflow temperature control module may operate in communication with the workload allocation module 14 so that, for example, the temperature of air supplied to the room and flowing along an airflow path within the forced airflow pattern can be adjusted in dependence upon the amount of workload being performed by computers 102 located along that airflow path.

In order to enable more complex analysis and additional optimisation of energy and resource usage, the controller 10 may optionally comprise a heat transfer potential data generation module 18. The heat transfer potential data generation module 18 is configured to use calculation or simulation (which simulation it may perform itself, or may provide inputs to an external simulation module to perform and receive the outputs) to determine the heat transfer potential of a computer, group of computers, geographical area, some other sub-division of the room, or the room as a whole (referred to as "regions" elsewhere in this document). Heat transfer potential may be represented, for example, by a power rating (heat removed per unit time). The heat transfer potential data generation unit may base its determinations upon a factor or factors including one or more of the forced airflow pattern in the room, the heat transfer characteristic of each local fan, and the temperature of the air pushed into the room 100 by each air supply fan 106. Heat transfer potential data may then be supplied, for example, to the supplied airflow temperature control module 17 to identify where more or less cooling is required, and to the workload allocation module 14 to identify where the heat transfer potential exceeds the heat generation (possibly based on a heat generation characteristic of a region) and hence where workload can be allocated next. Alternatively or additionally, the workload allocation module 14 may use the heat transfer potential data to identify where heat generation exceeds heat transfer potential, and hence either the airflow pattern selection module 16 informed in order that a new forced airflow pattern can be implemented, the supplied airflow temperature control module 17 be informed in order that the temperature of air supplied to that path of the airflow pattern can be reduced, or the workload allocation module 14 be informed so that future workload can be distributed to computers 102 located along a different airflow path.

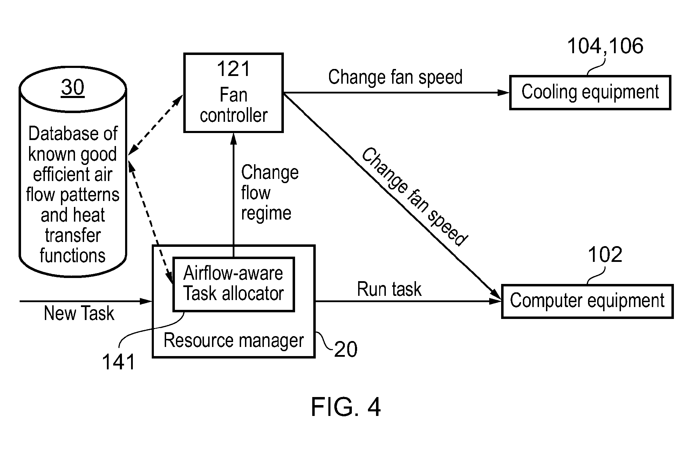

Figure 4 illustrates an example of an implementation of an embodiment of the present invention. In the example of Figure 4, the controller is split so that the workload allocation module described above is provided as an airflow-aware task allocator 141 having the equivalent functionality of the workload allocation module 14. The airflow-aware task allocator is provided as a component of a resource manager 20 for managing placement of virtual resources in a virtualised computing environment. The resource manager 20 (as an example of a resource management apparatus) is responsible for allocating work to computers in a virtualised computing environment and for ensuring that physical computing resources are used efficiently by effective placement of virtual resources. Resource managers 20 are available which use virtualisation to actively manage workload to meet multiple quality of service objectives such as efficient use of physical resources, maximum response times, and also enable a certain level of interaction with the data centre equipment to manage the cooling units. Advantageously, a resource manager 20 including a controller 10 embodying the present invention, or operating in cooperation with a controller 10 embodying the present invention, extends the capability of existing resource managers by knowing how the allocation of workload amongst the computers will affect the heat generated and so the cooling requirements.

The fan controller 121 is provided separately from the resource manager 20, although could alternatively be provided as part of the resource manager 20. The fan controller 121 has the functionality of the fan control module 12 described above. A database of known good efficient airflow patterns and heat transfer functions 30 (referred to as airflow pattern database elsewhere in this document) is also provided separately from the resource manager 20, though could also be provided as a component of the resource manager 20.

The airflow pattern selection module is not illustrated in Figure 4, but the functionality of the airflow pattern selection module 16 is performed by the airflow-aware task allocator 141 by selecting a forced airflow pattern from the airflow pattern database 30.

One or more static airflow patterns (wherein a static airflow pattern is an alternative term for a forced airflow pattern) that are known to cool the data centre under particular distributions of workload to the computer equipment are stored in the airflow pattern database 30, but could also be stored by the controller 10 or by a resource management apparatus 20. These forced airflow patterns may be created by simulation or by setting the fan speeds of the computers and air supply system to particular, fixed, values and recording the flow of air and heat through the room.

Either measurements using temperature sensors or heat flow simulations, such as CFD simulations, of the static airflow pattern will show how the heat flows from the sources (computer equipment) to the cooling apparatus (at the server-, rack-, row-, or room-level). This information is also recorded since it will ensure that allocations of workload will not exceed the heat transfer potential (which could also be termed the heat removal capability) of a region of the data centre.

Each stored forced airflow pattern is named or given an identifier and the fan speed settings producing the air flow pattern and the heat transfer potential of the airflow pattern for different air supply temperatures is entered into a database 30 for storage within, or consultation by, the controller when the computing environment is running a live load.

The airflow supply system 104, 106 has a data connection to the fan controller 121 so that fan speed changes can be signalled. Similarly, the computer equipment (computers) 102 has a data connection to the fan controller 121 so that fan speed changes can be signalled. The computer equipment 102 also has a data connection to the resource manager 20 so that tasks (workload) arriving at the resource manager and allocated by the airflow-aware task allocator 141 to computers among the computing equipment 102 can be sent. The airflow-aware task allocator 141 allocates the new task to the best location for the cooling capabilities of the current forced airflow pattern. The allocation is based on the heat generation characteristic of the computers performing the current workload as well as heat transfer potential data associated with the current forced airflow pattern in the airflow pattern database 30.

As an optional extension, if the computing environment is virtualised, the airflow-aware task allocator 141 may also be configured to request that the resource manager 20 move load (by moving virtual resources amongst the physical computing resources 102) in order to optimise the cooling efficiency.

The airflow-aware task allocator 141 may also be configured to instruct a change of flow regime (change of forced airflow pattern) in the room when certain predefined trigger events occur. For example, a trigger event may be a particular time of day, or workload reaching a certain level that comes within a predefined limit of the maximum workload that the current forced airflow pattern is adapted to cool.

The resource manager 20 is aware of the current state of the resources and will also inform the airflow-aware task allocator 141 when a task is complete and so no longer creating heat or has been relocated and so creating heat in another place. The airflow-aware task allocator 141 can respond to optimise the new loading.

Occasionally, these changes to the workload distribution (addition of load, subtraction of load or movement of load) will invalidate the current forced airflow pattern e.g. there is too much heat in one location or some area is not producing enough heat to be cooled so much. The airflow-aware task allocator detects these situations using modelling, simulation, sensors, or comparison of the current workload distribution with the heat transfer potential of the current forced airflow pattern and operating conditions and consults the airflow pattern database 30 to find a more appropriate airflow pattern.

The forced airflow pattern is maintained throughout all operating conditions within a range by locking the fan speeds so that they do not change with load - until the airflow-aware task allocator 141 determines that a new airflow pattern is needed. Heat transfer potential can be changed by altering operating conditions such as operating levels of the cooling units to change supply air temperature.

The airflow-aware task allocator 141 can also communicate with the resource manager 20 and request that load be redistributed to optimise the cooling capability of the new airflow pattern.

In order to change the flow regime, the airflow-aware task allocator 141 selects an appropriate new flow regime in the manner of the airflow pattern selection module 16 above, and signals to the fan controller that a new flow regime has been selected, along with an identifier of the new regime. The fan controller 121 is configured to access the airflow pattern database 30 to obtain information representing the forced airflow pattern or the fan speed configuration necessary to achieve that forced airflow pattern, and then to instruct the fans to change speeds as required.

Depending on the implementation, it may be that the forced airflow patterns require some manual configuration such as setting fan speeds and/or directing airflow using barriers and perforations. Alternatively, CFD simulations can be used to calculate fan speeds required to realise a forced airflow pattern and to ensure that safe operating temperatures are maintained throughout a range of loads on the computer equipment.

The static (static in the sense that it is maintained irrespective of changes in total workload or the distribution thereof within a range) airflow pattern is implemented by the fans - both the air supply fans connected to the cooling equipment and by the local fans in the IT equipment.

Once a database of safe, static airflow patterns has been created for the particular data centre, IT load can be accepted and placed in locations that ensure that cooling is most efficiently performed e.g. maximise the load on a subset of the cooling units so that they operate at the highest efficiency and the cooling function can be turned off (not the airflow) for the rest.

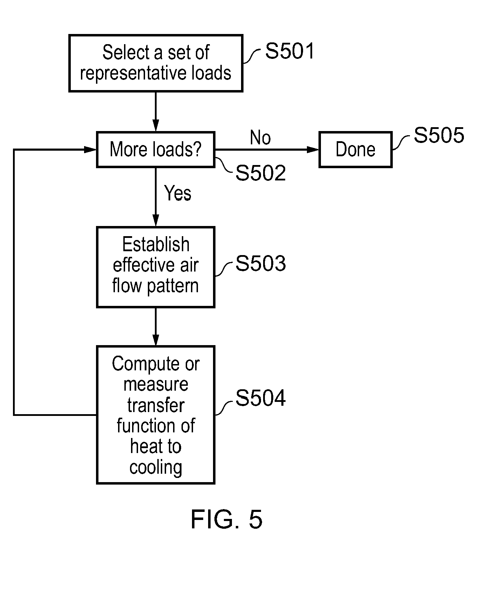

Figure 5 illustrates an exemplary process for creating a forced airflow pattern for a particular range of workloads. In step S501 a set of representative workloads within a range of total workloads are selected. The workloads may vary not only in the total amount of work that they represent, but also in terms of their distribution within the computers 102 housed in the room 100. Firstly, at step S502, a check is performed of whether steps S503 to S504 have yet been performed for each representative workload within the set. Steps S503 to S504 are performed on a per-distribution basis.

At step S503 a forced airflow pattern is established (by simulation or by experiment) that will channel airflow so that the computers 102 at which the workload is being performed are located along airflow paths of the established pattern. At step S504 the removal of the heat generated by performing the representative workload at the computers 102 is considered. The heat generation characteristics of the computers are used in conjunction with the heat transfer characteristics of their fans in order to establish the heat transfer potential of the pattern on a per region or per airflow path basis. It may be that there is a maximum temperature of air pushed into the room by the air supply fans required in order to remove the heat generated by the performing the workload, and that should be recorded, along with the established airflow pattern.

The forced airflow pattern and the heat transfer potential data are established for each representative load in the set so that once each load in the set has been analysed by steps S503 to S504, a set of forced airflow patterns has been established. Each forced airflow pattern, assuming air supply is at a sufficiently low temperature, can cool the computers 102 performing the representative workload for which it was established. Furthermore, by considering the effect of modifying operating conditions such as the temperature at which air is supplied by the cooling units, a range of workloads which the forced airflow pattern is adapted to cool can be established. At step S505, each of the established forced airflow patterns is stored along with the range of workloads for which it established, and the heat transfer potential data associated with the pattern.

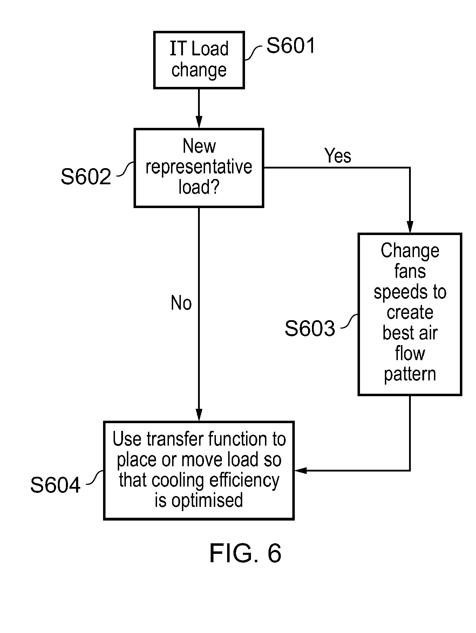

Figure 6 provides a summary of the control procedure that is performed when the workload in the computing environment changes. Figure 6 shows a variation where a set of safe, forced airflow patterns that work when some fans are turned off (and still maintain good airflow to the heat sources) are established. For example, for ½, 1/4 and full workloads. In operation, a forced airflow pattern can be chosen according to the overall IT load and the load placed to optimise the cooling efficiency within that regime.

At step S601 a workload change is identified by the workload allocation module 14. At step S602, it is determined whether the change in workload takes the total workload outside of the range of total workloads which the current forced airflow pattern is adapted to cool. If it does, then the flow proceeds to step S603, and a new forced airflow pattern is selected and implemented by changing fan speeds before the flow proceeds to step S604. If it does not, the flow proceeds to step S604. At step S604 the heat transfer potential (transfer function) of the current forced airflow pattern and current operating conditions is compared with the current workload distribution to place the new workload among the computers 102 so that cooling efficiency is optimised. It may be that the new load placement necessitates or enables a modification of the operating conditions, such as the operating levels of one or more cooling units.

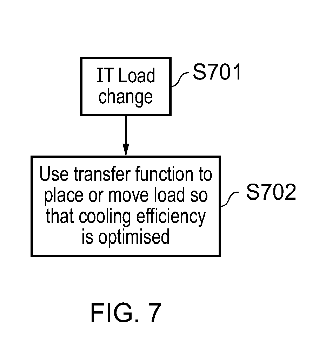

Figure 7 illustrates a simplified example of the control procedure that is performed when the workload in the computing environment changes in an embodiment in which there is only one established forced airflow pattern.

At step S701 a workload change is identified by the workload allocation module 14. At step S702 the heat transfer potential (transfer function) of the current forced airflow pattern and current operating conditions is compared with the current workload distribution to place the new workload among the computers 102 so that cooling efficiency is optimised. It may be that the new load placement necessitates or enables a modification of the operating conditions, such as the operating levels of one or more cooling units.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A controller for a computing environment, the computing environment including:
a room containing a plurality of computers each having an individual housing and a local fan for pulling air into the housing; and
an air supply system having one or more air supply fans for pushing air into the room; the pushing of air by the one or more air supply fans and the pulling of air by the local fans creating a forced airflow pattern; the controller comprising:
a fan control module operable to set the speed of each local fan and each air supply fan to realise a configuration of speeds required for a predetermined forced airflow pattern; and
a workload allocation module being operable to allocate workload to computers among the plurality of computers, wherein allocations are based on the forced airflow pattern.

2. A controller according to claim 1, further comprising:
an airflow pattern selection module being operable to select a forced airflow pattern for the room from among a plurality of predetermined forced airflow patterns, the selection being made based on a requirement that a current total workload being handled by the plurality of computers collectively is within a range of total workloads for which the forced airflow pattern is adapted to sufficiently cool the plurality of computers.

3. A controller according to claim 2, wherein
the fan control module is operable to maintain the selected forced airflow pattern irrespective of changes in workload distribution and irrespective of changes in the current total workload while the current total workload remains within the range of the selected forced airflow pattern.

4. A controller according to claim 2 or 3, wherein
the airflow pattern selection module is operable to store each of a plurality of predetermined forced airflow patterns for the room in association with a range of total workloads for which the forced airflow pattern is adapted to sufficiently cool the plurality of computers.

5. A controller according to any of claims 1 to 4, wherein:
the fan control module is also operable to set the speeds of circulation fans which are fans provided in the room in addition to the plurality of local fans and the one or more air supply fans.

6. A controller according to any of claims 1 to 5, further comprising:
a heat transfer potential data generation module configured to use a model of the forced airflow pattern, data representing the temperature of the air that is pushed into the room by the or each air supply fan, and data representing heat transfer properties of the local fans, to determine the heat transfer potential of the room or one or more regions within the room.

7. A controller according to any of claims 1 to 6, wherein:
the air supply system further comprises one or more cooling units configured to remove heat from the air before it is pushed into the room by the one or more air supply fans; the controller further comprising:
a supplied airflow temperature control module being operable to control the one or more cooling units to set the temperature of the air that is pushed into the room by the or each air supply fan.

8. A controller according to claim 7, wherein:
the supplied airflow temperature control module is configured:
to adjust the temperature of the air that is pushed into the room by the or each air supply fan in order to maintain a difference between the heat generation in the room or
a region of the room and the heat transfer potential of said room or region of the room at a predetermined level.

9. A controller according to claim 8, wherein:
based on a model of the forced airflow pattern, the workload allocation module is configured to allocate workload to a computer in which the air that is pulled into the housing by the local fan has been cooled by one of the one or more cooling units operating at a level below a level of maximum efficiency.

10. A resource management apparatus for a computing environment, the computing environment including:
a room containing a plurality of computers each having an individual housing and a local fan for pulling air into the housing; and
an air supply system having one or more air supply fans for pushing air into the room, the pushing of air by the one or more air supply fans and the pulling of air by the local fans creating a forced airflow pattern; wherein
the resource management apparatus is configured to allocate computing resources of the plurality of computers to one or more virtual machines to which workload can be allocated, the resource management apparatus comprising a controller according to any of claims 1 to 9, the workload allocation module being operable to allocate workload to computers among the plurality of computers by allocating workload to a virtual machine in dependence upon the location of the computing resources allocated to the virtual machine.

11. A computing environment including:
a plurality of computers being housed within a room and each having an individual housing and a local fan for pulling air into the housing;
an air supply system having one or more air supply fans for pushing air into the room, the pushing of air by the one or more air supply fans and the pulling of air by the local fans creating a forced airflow pattern; and
a controller according to any of claims 1 to 9, or a resource management apparatus according to claim 10.

12. A method for controlling fan speeds and workload allocation in a computing environment, the computing environment including:
a room containing a plurality of computers each having an individual housing and a local fan for pulling air into the housing; and
an air supply system having one or more air supply fans for pushing air into the room; the pushing of air by the one or more air supply fans and the pulling of air by the local fans creating a forced airflow pattern; the method comprising:
setting the speed of each local fan and each air supply fan to realise a configuration of speeds required for a predetermined forced airflow pattern; and
allocating workload to computers among the plurality of computers, wherein allocations are based on the forced airflow pattern.

13. A computer program which, when executed by a computer or computers, causes the computer or computers to function as the controller defined in any of claims 1 to 9, or to function as the resource management apparatus defined in claim 10.

14. A computer program which, when executed by a computer or computers, causes the computer or computers to perform the method defined in claim 12.

## Amended claims

### Amended claims in accordance with Rule 137(2) EPC.

**1.** A controller for a computing environment, the computing environment including:
a room containing a plurality of computers each having an individual housing and a local fan for pulling air into the housing; and
an air supply system having one or more air supply fans for pushing air into the room; the pushing of air by the one or more air supply fans and the pulling of air by the local fans creating a forced airflow pattern; the controller comprising:
a fan control module operable to set the speed of each local fan and each air supply fan to realise a configuration of speeds required to create a predetermined forced airflow pattern as the forced airflow pattern; and
a workload allocation module being operable to allocate workload to computers among the plurality of computers, wherein allocations are based on the predetermined forced airflow pattern.

**2.** A controller according to claim 1, further comprising:
an airflow pattern selection module being operable to select a forced airflow pattern for the room from among a plurality of predetermined forced airflow patterns, the selection being made based on a requirement that a current total workload being handled by the plurality of computers collectively is within a range of total workloads for which the forced airflow pattern is adapted to sufficiently cool the plurality of computers.

**3.** A controller according to claim 2, wherein
the fan control module is operable to maintain the selected forced airflow pattern irrespective of changes in workload distribution and irrespective of changes in the current total workload while the current total workload remains within the range of the selected forced airflow pattern.

**4.** A controller according to claim 2 or 3, wherein
the airflow pattern selection module is operable to store each of a plurality of predetermined forced airflow patterns for the room in association with a range of total workloads for which the forced airflow pattern is adapted to sufficiently cool the plurality of computers.

**5.** A controller according to any of claims 1 to 4, wherein:
the fan control module is also operable to set the speeds of circulation fans which are fans provided in the room in addition to the plurality of local fans and the one or more air supply fans.

**6.** A controller according to any of claims 1 to 5, further comprising:
a heat transfer potential data generation module configured to use a model of the forced airflow pattern, data representing the temperature of the air that is pushed into the room by the or each air supply fan, and data representing heat transfer properties of the local fans, to determine the heat transfer potential of the room or one or more regions within the room.

**7.** A controller according to any of claims 1 to 6, wherein:
the air supply system further comprises one or more cooling units configured to remove heat from the air before it is pushed into the room by the one or more air supply fans; the controller further comprising:
a supplied airflow temperature control module being operable to control the one or more cooling units to set the temperature of the air that is pushed into the room by the or each air supply fan.

**8.** A controller according to claim 7, wherein:
the supplied airflow temperature control module is configured:
to adjust the temperature of the air that is pushed into the room by the or each air supply fan in order to maintain a difference between the heat generation in the room or a region of the room and the heat transfer potential of said room or region of the room at a predetermined level.

**9.** A controller according to claim 8, wherein:
based on a model of the forced airflow pattern, the workload allocation module is configured to allocate workload to a computer in which the air that is pulled into the housing by the local fan has been cooled by one of the one or more cooling units operating at a level below a level of maximum efficiency.

**10.** A resource management apparatus for a computing environment, the computing environment including:
a room containing a plurality of computers each having an individual housing and a local fan for pulling air into the housing; and
an air supply system having one or more air supply fans for pushing air into the room, the pushing of air by the one or more air supply fans and the pulling of air by the local fans creating a forced airflow pattern; wherein
the resource management apparatus is configured to allocate computing resources of the plurality of computers to one or more virtual machines to which workload can be allocated, the resource management apparatus comprising a controller according to any of claims 1 to 9, the workload allocation module being operable to allocate workload to computers among the plurality of computers by allocating workload to a virtual machine in dependence upon the location of the computing resources allocated to the virtual machine.

**11.** A computing environment including:
a plurality of computers being housed within a room and each having an individual housing and a local fan for pulling air into the housing;
an air supply system having one or more air supply fans for pushing air into the room, the pushing of air by the one or more air supply fans and the pulling of air by the local fans creating a forced airflow pattern; and
a controller according to any of claims 1 to 9, or a resource management apparatus according to claim 10.

**12.** A method for controlling fan speeds and workload allocation in a computing environment, the computing environment including:
a room containing a plurality of computers each having an individual housing and a local fan for pulling air into the housing; and
an air supply system having one or more air supply fans for pushing air into the room; the pushing of air by the one or more air supply fans and the pulling of air by the local fans creating a forced airflow pattern; the method comprising:
setting the speed of each local fan and each air supply fan to realise a configuration of speeds required to create a predetermined forced airflow pattern as the forced airflow pattern; and
allocating workload to computers among the plurality of computers, wherein allocations are based on the predetermined forced airflow pattern.

**13.** A computer program which, when executed by a computer or computers, causes the computer or computers to function as the controller defined in any of claims 1 to 9, or to function as the resource management apparatus defined in claim 10.

**14.** A computer program which, when executed by a computer or computers, causes the computer or computers to perform the method defined in claim 12.
